Europäisches Patentamt

European Patent Office

Office européen des brevets

(11) Numéro de publication: **0 393 760 B1**

## FASCICULE DE BREVET EUROPEEN

(45) Date de publication de fascicule du brevet: **13.07.94**   (51) Int. Cl.5: **G01S 13/34**, G01S 7/35

(21) Numéro de dépôt: **90200898.6**

(22) Date de dépôt: **12.04.90**

(54) **Dispositif de discrimination d'échos diffusés en volume pour radar de mesure de distance FM/CW et application à un radioaltimètre.**

(30) Priorité: **21.04.89 FR 8905336**

(43) Date de publication de la demande:
**24.10.90 Bulletin 90/43**

(45) Mention de la délivrance du brevet:
**13.07.94 Bulletin 94/28**

(84) Etats contractants désignés:
**DE FR GB IT**

(56) Documents cités:
**FR-A- 1 557 670**
**US-A- 4 200 871**

**L'ONDE ELECTRIOUE, vol. 51, no. 5, mai 1971, pages 406-410, Paris, FR; J.P.LANDROT: "Radioaltimètre à modulation de fréquence"**

(73) Titulaire: **THOMSON-TRT DEFENSE**
**88, rue Brillat Savarin**
**F-75013 Paris(FR)**

(84) Etats contractants désignés:
**DE FR GB IT**

(72) Inventeur: **Strauch, Raymond, Societe Civile S.P.I.D.**
**209 rue de L'Université**
**F-75007 Paris(FR)**

(74) Mandataire: **Courtellemont, Alain et al**
**THOMSON-CSF,**
**SCPI,**
**B.P. 329,**
**50, rue Jean-Pierre Timbaud**
**F-92402 Courbevoie Cédex (FR)**

Rank Xerox (UK) Business Services
(3. 10 / 3.0 9 / 3.3.3)

EP 0 393 760 B1

**Description**

L'invention concerne un dispositif de discrimination d'échos diffusés en volume pour radar de mesure de distance à onde continue modulée linéairement en dents de scie de fréquence FM/CW qui comporte, en série dans une boucle d'asservissement de la fréquence fb du signal de battement soustractif Fb entre ondes émise et reçue en écho, un discriminateur de poursuite recevant ledit signal de battement pour maintenir à une valeur fixe $f_0$ la fréquence fb et un circuit de validation de poursuite.

L'invention s'applique notamment aux radioaltimètres embarqués à bord d'aéronefs ou aux fusées de proximité pour missiles. L'application aux radioaltimètres vise à éviter l'accrochage indésirable de ces derniers sur des échos de pluie ou de grêle et une indication fausse de l'altitude.

En ce qui concerne les fusées de proximité la reconnaisance d'un Echo Diffusé en Volume (EDV dans la suite du texte) permet d'inhiber le fonctionnement de ces dernières en présence de pluie, de grêle ou de paillettes, et donc d'éviter des déclenchements intempestifs.

Quel que soit leur type de modulation, en impulsions ou FM/CW, les radars peuvent détecter des échos diffus, distribués en volume, et ceci d'autant plus facilement que la longueur d'onde utilisée est plus courte. Cette propriété est mise à profit dans les radars météorologiques pour détecter les précipitations orageuses. Dans d'autres types de radars, comme par exemple les radioaltimètres d'avion, la détection d'un volume de précipitations situé entre l'aéronef et le sol constitue un inconvénient grave. On s'en affranchit dans une large mesure en utilisant des longueurs d'onde suffisamment grandes, par exemple : $\lambda$ = 7 cm pour les radioaltimètres au lieu de : $\lambda$ = 2 cm pour les radars météorologiques. Toutefois l'automatisation de plus en plus poussée des aéronefs, en particulier pendant la phase d'atterrissage, requiert une protection accrue vis à vis d'indications erronées, même fugitives, pouvant être causées par un accrochage intempestif du radioaltimètre sur des précipitations fortes, peu fréquentes il est vrai, mais non exceptionnelles.

Il est connu, notamment du brevet français FR-A 1 557 670 de munir un radioaltimètre du type défini au premier paragraphe d'organes de contrôle interne, notamment un organe dit discriminateur de contraste pour contrôler la puissance et la forme du spectre du signal de battement de part et d'autre de la fréquence de consigne $f_0$, par exemple égale à 25 kHz. Dans un système radar FM/CW à pente linéaire, le spectre de fréquence de battement après réflexion de l'onde sur un sol diffusant plan indéfini, $W_S(f)$, a une allure dissymétrique avec un maximum d'amplitude pour une fréquence minimale fmin et $W_S(f)$ décroît ensuite fortement jusqu'à une valeur notée fmax telle que :

$$fmax = fmin/cos\theta$$

avec l'hypothèse d'un lobe conique de rayonnement de demi-angle d'ouverture $\theta$. Au delà de fmax, l'amplitude du spectre devient négligeable.

La fréquence fmin correspond à la distance minimum, donc à l'altitude et la partie significative du spectre est concentrée dans une bande de fréquence fmin à fmax, dite bande centrale qui ne dépasse pas 15 % en valeur relative dans le cas pratique où $\theta \simeq 30°$, soit :

$$\frac{fmax-fmin}{fmin} \simeq 0,15$$

Lorsque la boucle altimétrique est en phase de recherche d'accrochage (à la mise en route, à la suite d'un décrochage ou au cours du cycle de recherche séquentiel de vérification d'intégrité), l'éventuel spectre réfléchi par le sol balaye l'axe de fréquence en passant au droit de la fréquence de consigne $f_0$. Le discriminateur de contraste, centré sur $f_0$, compare en permanence l'énergie dans une fenêtre de bande centrale qui contient la fréquence $f_0$ avec l'énergie hors bande (une ou deux fenêtres de bandes latérales adjacentes), la caractéristique fréquencielle du discriminateur étant agencée de façon qu'un bruit blanc plat équilibre sensiblement la pesée référencée C, la puissance recueillie dans la fenêtre de bande centrale étant comptée en positif et celle recueillie dans les fenêtres de bandes latérales étant comptée en négatif.

En présence de signal réfléchi par le sol le spectre de Fb est presque entièrement contenu dans la fenêtre de bande centrale, et le bilan de la pesée dépasse un seuil positif prédéterminé $C_0$, ce qui entraîne le maintien de l'accrochage de la boucle de poursuite altimétrique sur le sol.

Pour un écho diffusé en volume de précipitations, la forme du spectre de Fb est différente de celle de l'écho de sol indiquée ci-dessus : le maximum du spectre étant toujours calé sensiblement sur la fréquence $f_0$, une partie du spectre se situe dans la fenêtre de bande latérale des fréquences inférieures, dans le cas préféré où il existe deux fenêtres de bandes latérales, l'enveloppe étant une courbe à fortes pentes

2

positives et, après passage du maximum dans la fenêtre de bande centrale, l'enveloppe du spectre subit une décroissance lente telle que des puissances non négligeables sont présentes dans toute la fenêtre de bande latérale des fréquences supérieures et même au delà si la profondeur du volume de précipitations est suffisante, ce qui est généralement le cas. L'expérience et le calcul montrent que, pour des échos sur de fortes précipitations, la pesée effectuée par le discriminateur de contraste peut dépasser le seuil $C_0$, autorisant ainsi l'accrochage du radioaltimètre sur une distance située à l'intérieur du volume de précipitations. Un tel accrochage erroné se produit lorsque l'inégalité suivante est réalisée :

$$\int_0^\infty H(f)\ W_v(f)\ df \geqslant C_0(h)$$

$W_v(f)$ :     Spectre de Fb (puissances),

$H(f)$ :     Fonction de pondération des fenêtres du discriminateur de contraste,

$C_0(h)$ :     seuil positif fonction de l'altitude affichée selon une loi interne à l'appareil ; cette loi reproduit approximativement l'atténuation spatiale théorique entre l'antenne d'émission et l'antenne de réception après absorption et réflexion sur le sol nominalement le moins réfléchissant ($\sigma_0$ min = - 23 dB).

Un autre facteur qui intervient dans le problème technique de l'accrochage d'un radioaltimètre sur un écho EDV est la loi de rayonnement de l'antenne (diagramme en roulis). Cette loi étant du type $\cos^n\theta$, la valeur de n conditionne l'influence des mouvements de roulis sur la mesure de l'altitude et aussi, comme le montre le calcul, la sensibilité à l'accrochage sur les précipitations.

Pour résoudre le problème technique posé, on a pensé à optimiser le discriminateur de contraste de façon telle qu'il puisse aussi opérer, entre autres, une discrimination sur un écho diffusé en volume, étant donnée la forme de son spectre assez différente de celle d'un écho de sol. Cette optimisation est possible et permet une certaine réjection des échos EDV pour les valeurs de $\theta$ supérieures à 30°. Cependant, les angles de rayonnement d'antennes imposés aux radioaltimètres sont typiquement compris entre 20° et 30° et le discriminateur de contraste optimisé ne suffit alors pas à réjecter suffisamment les signaux EDV, surtout à cause de la très forte dynamique des signaux liés aux paramètres extérieurs, c'est-à-dire aux précipitations envisageables. En effet, le coefficient de réflectivité $\eta$ en $m^2/m^3$, c'est-à-dire la surface équivalente radar (SER) par volume de précipitations, exprimé en dB (10 log.$\eta$) est de - 54 dB pour une forte pluie (100 mm/h), de - 42 dB pour de la grêle sèche et de - 32 dB pour de la grêle humide, cette dernière représentant les précipitations les plus fortes.

Selon l'invention, le problème est résolu et les inconvénients de l'art antérieur liés à l'insuffisance du discriminateur de contraste sont supprimés grâce au fait que le dispositif de discrimination indiqué au premier paragraphe est caractérisé par le fait qu'il est conçu pour recevoir le signal de battement en entrée, par la combinaison d'un ensemble de discrimination de contraste avec un ensemble de discrimination d'échos EDV, pour détecter de l'énergie dans une bande de fréquence dite bande de garde située à, ou au-delà de l'extrémité supérieure des bandes de fréquence de l'ensemble de discrimination de contraste, ce dernier comportant en série un discriminateur de contraste et un premier atténuateur, et étant conçu pour commander ledit circuit de validation de poursuite, et ledit ensemble de discrimination d'écho EDV étant conçu pour commander le gain dudit premier atténuateur.

Le dispositif selon l'invention est basé sur l'exploitation de la différence de nature entre les spectres des signaux Fb dus à l'écho de sol (ou d'une cible ponctuelle) et les spectres dus à l'écho EDV comme déjà indiqué ci-dessus : la dispersion du spectre de battement causée par une cible étendue en volume est mise en évidence par un niveau, référencé D, du signal apparaissant dans une bande supplémentaire, dite bande (ou canal) de garde centré sur une fréquence $f_1$ supérieure à $f_0$. Si l'on exprime le diagramme de rayonnement de l'antenne du radioaltimètre par une loi en $\cos^n\theta$, n étant habituellement grand par rapport à 1, on peut montrer par le calcul que, en première approximation, le rapport C/D entre niveaux de contraste et de dispersion diminue dans le rapport $(f_0/f_1)^{2n+1}$ lorsqu'on passe d'une cible étendue homogènement en surface à une cible étendue homogènement en volume. De plus, si la cible étendue en surface devient quasi-ponctuelle, ce qui est le cas des fusées de proximité, la diminution précitée du rapport C/D est encore plus prononcée.

Selon un mode de réalisation préféré, le discriminateur selon l'invention est remarquable en ce que ledit ensemble de discrimination EDV comporte un canal de garde et un deuxième atténuateur muni d'une commande automatique de gain pour réguler sa sortie à une valeur de consigne $D_0$ et que les premier et deuxième atténuateurs sont identiques et reçoivent le même signal de commande de gain.

En procédant ainsi, les signaux de contraste C et de dispersion D sont transmis séparément à deux amplificateurs identiques utilisés en atténuateurs. La commande de gain commune aux deux amplificateurs

revient à opérer une division entre les niveaux des signaux C et D et à transformer la grandeur C en la grandeur C′ en sortie du premier atténuateur, telle que :

C′ = $D_0$ C/D

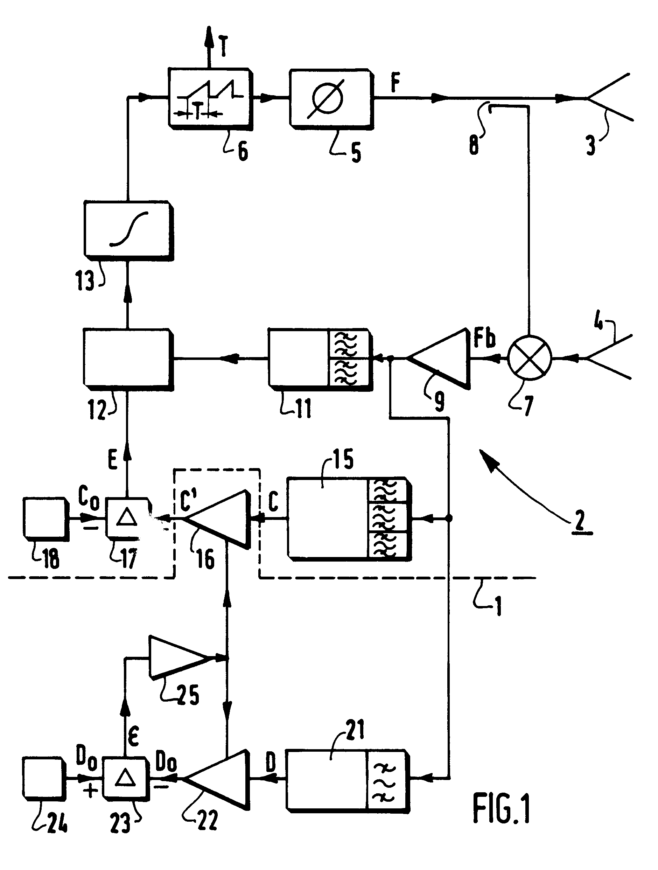

Le seuil $D_0$ est ajusté de telle sorte que :
 C′ ≥$C_0$ en présence d'une cible étendue homogènement en surface.
Par voie de conséquence on aura alors :
 C′ ≪ $C_0$ en présence d'une cible étendue en volume.
De préférence, la bande de garde du discriminateur EDV est centrée à la fréquence $f_1$, de l'ordre de 1,6 fois la fréquence de consigne $f_0$ et sa largeur est de l'ordre de 0,2 $f_0$.
 L'invention procure les avantages et les performances suivants :
- La référence au rapport C/D et son exploitation sont peu sensibles aux mouvements d'assiette de l'aéronef, au roulis notamment, ainsi qu'aux fluctuations statistiques des précipitations à envisager et à la dynamique du récepteur.
- L'évolution du rapport C/D en fonction de l'altitude et en tenant compte de la dégradation spectrale aux basses altitudes montre, en plaçant le seuil de décision à + 3 dB en ce qui concerne la variation de C/D que :
- pour un diagramme de rayonnement étroit en $\cos^4\theta$, le domaine utilisable de l'invention s'étend de 10 pieds à 5000 pieds pour des variations d'assiette de ± 30°,et des précipitations maximum ($\eta$ = - 30 dB),
- pour un diagramme de rayonnement large en $\cos^{0,5}\theta$, le domaine d'utilisation s'étend de 10 pieds à 15000 pieds pour des variations d'assiette de ± 60° (roulis), et des précipitations maximum ($\eta$ = - 30 dB).
 La description qui suit en regard des dessins annexés, le tout donné à titre d'exemple, fera bien comprendre comment l'invention peut être réalisée.
 La figure 1 est le schéma synoptique d'un radar FM/CW de mesure de distance muni d'un dispositif de discrimination selon l'invention.
 Les figures 2a et 2b représentent les spectres du signal Fb respectivement dus à l'écho de sol et à l'écho EDV, ainsi que les fenêtres de bande passante du discriminateur de contraste et du discriminateur d'échos EDV.
 On a représenté à la figure 1, au-dessus d'une ligne en trait interrompu 1 un radar FM/CW de mesure de distance connu, référencé 2 dans lequel une boucle d'asservissement maintient constante la fréquence de battement entre ondes émises et reçue. Ce radar comporte une antenne émettrice 3 et une antenne réceptrice 4. En ce qui concerne la partie émission, le radar 2 comporte un oscillateur commandé par tension (VCO) 5 relié à l'antenne d'émission 3, qui émet une onde hyperfréquence F et dont l'entrée reçoit le signal de tension de sortie d'un générateur de dents de scie (GDS) 6. La partie réception est constituée par une chaîne de traitement de signal comportant en cascade un circuit mélangeur 7 dont la première des deux entrées est reliée à l'embouchure de l'antenne réceptrice 4 et la deuxième entrée à la sortie du VCO 5 par l'intermédiaire d'un coupleur 8 puis un amplificateur à fréquence intermédiaire 9, un discriminateur de poursuite 11, un circuit de validation de poursuite 12 et un organe d'intégration 13 dont le signal de sortie commande le générateur de dents de scie 6.
 Lorsque le radar 2 fonctionne et qu'un écho de l'onde F émise en 3 est reçu par l'antenne réceptrice 4, un signal de battement soustractif Fb à fréquence intermédiaire fb apparaît en sortie du mélangeur 7. La fréquence fb est égale à la différence de fréquence entre les ondes émise et reçue, pendant la durée des rampes de fréquence de ces ondes ; cette fréquence fb est constante dans la mesure où les rampes de la dent de scie émise sont bien linéaires et la distance (l'altitude) recherchée, h, se déduit de l'expression classique :

$$h = \frac{C \cdot fb}{2\Delta F} T \qquad\qquad (1)$$

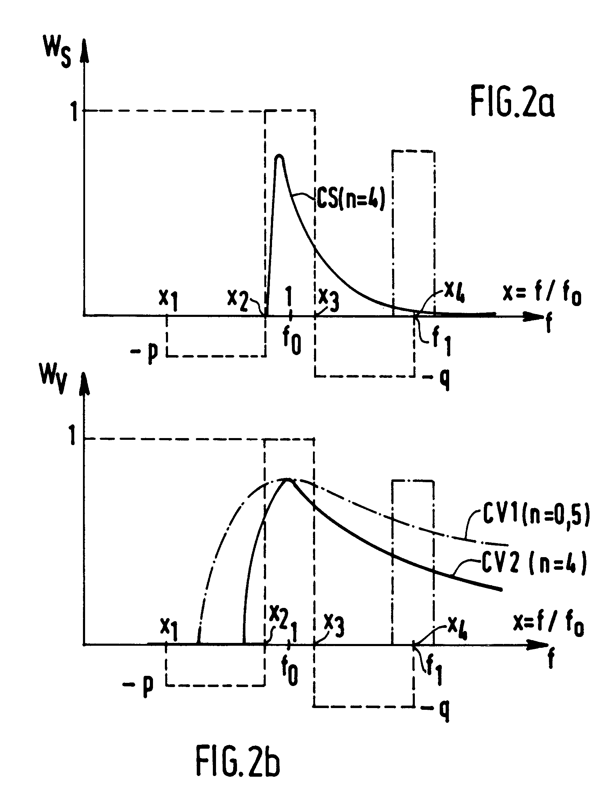

 C : vitesse de l'onde électromagnétique dans l'air,
 T : durée de la rampe de fréquence de la dent de scie d'émission,
 ΔF : excursion de fréquence de la rampe de la dent de scie, constante.
 Le radar 2 est du type à asservissement de la pente de la rampe de fréquence pour maintenir égale à une valeur de consigne prédéterminée constante $f_0$ la valeur de la fréquence fb. La chaîne de retour de cet

4

asservissement est constituée par les éléments 8, 7, 9, 11, 12 et 13 et dans cette chaîne, le discriminateur de poursuite 11 à deux bandes passantes adjacentes symétriques par rapport à $f_0$, assure le maintien de fb à la valeur de consigne $f_0$ ; dans ces conditions, lorsque la boucle d'asservissement est active, ce qui implique la présence d'un écho, la distance de cet écho est donnée à un facteur multiplicatif près par la mesure de la période T en sortie du GDS 6. Pour obtenir l'accrochage de la boucle d'asservissement, une phase de recherche systématique préalable est nécessaire. Cette recherche consiste à donner à la pente de la rampe de fréquence, par incrémentation, des valeurs décroissantes (des valeurs croissantes correspondantes pour T) jusqu'à obtention d'une valeur fb proche de $f_0$, ce qui provoque l'accrochage de la boucle d'asservissement et l'abandon simultané de la phase de recherche, le discriminateur de poursuite 11 étant par exemple tel que décrit en 52 dans le brevet précité FR-A 1 557 670. Dans le cas d'un radioaltimètre qui est particulièrement visé ici, c'est l'écho du sol qui est recherché, cet écho étant caractérisé par sa puissance en fonction de l'altitude (proportionnelle à la durée de la rampe de fréquence) et par la forme de son spectre. La puissance attendue de l'écho de sol, fortement variable en fonction de l'altitude, est comparée à un seuil $C_0$, préétalonné et fonction de T, fourni par une loi interne au radar et qui suit en première approximation la variation de puissance de l'écho de sol minimum théorique ; pour être reconnue comme telle, cette puissance doit être supérieure au seuil $C_0$. D'autre part, un ensemble de discrimination de contraste permet, pour l'essentiel, de sélectionner parmi d'autres la forme du spectre de l'écho de sol et de valider ou non en conséquence l'accrochage de la boucle d'asservissement. L'enveloppe du spectre en puissance de l'écho de sol est représentée par la courbe CS de la figure 2a, pour lequel le diagramme de rayonnement d'antenne est : $\cos^n \theta = \cos^4 \theta$. L'ensemble de discrimination de contraste est constitué, à partir de la sortie de l'amplificateur 9, par un discriminateur de contraste 15, un premier atténuateur 16 dont on suppose pour l'instant, conformément à l'art connu, que le gain est fixe et égal à 1, et un premier comparateur 17, qui reçoit sur une deuxième entrée le signal de consigne $C_0$ mentionné plus haut fourni par un circuit de seuil 18 et dont le signal de sortie E commande le circuit de validation de poursuite 12. Le discriminateur de contraste 15 est par exemple du type décrit en 44, 46, 48 dans le brevet FR-A 1 557 670 ; de préférence, ce discriminateur de contraste comporte trois filtres de bandes passantes adjacentes comme représenté en trait interrompu aux figures 2a et 2b. Si on considère l'abscisse réduite : $x = f/f_0$, la bande passante latérale gauche est comprise entre les valeurs $x_1$ et $x_2$ toutes deux inférieures à 1 et la bande passante latérale droite entre les valeurs $x_3$ et $x_4$, supérieures à 1. La bande centrale est située de part et d'autre de la valeur 1 qui correspond à la fréquence $f_0$. D'autre part, les puissances détectées dans chaque filtre sont pondérées algébriquement ; par exemple, si on donne la pondération + 1 pour le filtre central, les pondérations des filtres gauche et droit sont par exemple égales à : - p = - 0,2 et - q = - 0,3. Le but recherché pour les pondérations associées aux largeurs de bande est que le bilan des puissances détectées par le discriminateur de contraste pour un bruit blanc soit légèrement négatif de façon à fournir un signal (niveau) C légèrement négatif en sortie du discriminateur 15. Lorsque la boucle d'asservissement est accrochée sur un écho de sol, l'essentiel de la puissance de cet écho est détecté dans le filtre central où se trouve le maximum de la courbe CS, sensiblement pour la fréquence $f_0$. Il n'y a aucune puissance dans le filtre de gauche et une faible puissance seulement dans le filtre de droite. Par intégration de la courbe CS et en prenant en compte les pondérations des filtres, on obtient, en faisant le bilan des puissances comptées positivement et des puissances comptées négativement, un signal C dépendant à la fois de la forme du spectre et de l'intensité du signal réfléchi par le sol.

Le niveau C est comparé au seuil $C_0$, dans le comparateur 17 qui effectue la différence : $E = C - C_0$. Lorsque, par action du discriminateur de poursuite 11, la boucle d'asservissement est accrochée et après une temporisation de courte durée, si le signal E est positif, le circuit de validation de poursuite 12 maintient l'accrochage de la boucle d'asservissement. Si par contre le signal E est négatif, le circuit 12 ouvre la boucle d'asservissement ; dans ce dernier cas, le circuit 12 peut aussi déclencher une alarme et/ou relancer la phase de recherche cyclique de l'écho de sol. L'ensemble de discrimination de contraste, en association avec le circuit de validation de poursuite, permet ainsi d'éliminer la plupart des échos parasites, autres que les échos de sol. Il peut se produire cependant que, soit lors de la phase de recherche soit même lorsque la boucle d'asservissement est accrochée sur l'écho de sol, un écho plus puissant que ce dernier, dû à de très fortes précipitations, c'est-à-dire un écho diffusé en volume (écho EDV), prenne le pas sur l'écho de sol (de surface) et provoque l'accrochage du radioaltimètre sur les précipitations, ce qui fausse complètement la mesure d'altitude (par défaut).

Deux enveloppes normées de spectres en puissance dus à un même écho EDV sont représentées à la figure 2b. La courbe CV1 en trait mixte est l'enveloppe qui est obtenue pour une antenne de réception à diagramme large en roulis, du type : $\cos^n \theta = \cos^{0,5} \theta$, c'est-à-dire une antenne peu sensible aux effets de roulis et la courbe CV2 en trait plein correspond à un diagramme d'antenne étroit en roulis du type $\cos^n \theta = \cos^4 \theta$. L'intensité de l'EDV pouvant varier dans des limites très larges, la discrimination de contraste décrite plus haut devient insuffisante pour interdire d'une façon univoque tout accrochage sur un EDV. Il est donc nécessaire d'introduire un critère de décision basé sur la seule forme du spectre et indépendant de son intensité.

L'invention consiste à combiner à l'ensemble de discrimination de contraste un ensemble de discrimination d'échos EDV représenté en dessous de la ligne 1 à la figure 1 et comportant, à partir de la sortie de l'amplificateur 9, un canal de garde 21 qui fournit un signal de dispersion D, un deuxième atténuateur 22, un deuxième comparateur 23, qui reçoit sur une deuxième entrée additive un signal de seuil $D_0$ fixe en provenance d'un deuxième circuit à seuil 24 et qui attaque un amplificateur de commande automatique de gain 25 ce dernier ayant sa sortie reliée aux entrées de commande de gain des atténuateurs 22 et 16, identiques. Le canal de garde (ou canal de dispersion) 21, consiste en un seul filtre de bande passante, dite bande de garde, à fréquences situées à l'extrémité supérieure des bandes de fréquence du discriminateur de contraste et centrée sur la fréquence $f_1$. La fenêtre correspondante est représentée par les gabarits en trait mixte, figure 2a et 2b. On peut noter en effet une grande différence de puissances du signal Fb dans la bande de garde, selon qu'il s'agit d'un écho de sol ou d'un écho EDV ; en effet, le rapport C/D entre niveaux de contraste et de dispersion varie (diminue) environ dans le rapport $(f_0/f_1)^{2n+1}$ selon qu'on a affaire à un écho de sol ou à un écho EDV. Ceci procure une très bonne discrimination entre les échos de sol et les échos EDV, pour toutes les valeurs possibles du paramètre n qui caractérise le rayonnement d'antenne ; par exemple, pour une antenne à diagramme de rayonnement étroit (n = 4), le rapport C/D peut diminuer de plus de 20 dB lorsqu'on passe d'un écho réfléchi par une surface plane (le sol) à un écho réfléchi par un volume diffusant ; avec une antenne à diagramme large (n = 0,5), le rapport C/D diminue encore d'environ 8 dB lorsqu'on passe du sol à un volume diffusant. On notera que ce rapport C/D est indépendant des niveaux réfléchis puisqu'il est lié à la forme des spectres et non à leur intensité.

Pour ce qui est du choix de la fréquence $f_1$, il faut noter que l'écart des niveaux de puissance entre $W_S$ et $W_V$ s'accentue lorsqu'on s'éloigne vers les fréquences élevées, ce qui est favorable à une bonne discrimination ; cependant, il ne faut pas avoir à faire d'hypothèses trop hasardeuses sur la profondeur de la couche de précipitations. Un bon compromis consiste à centrer la bande de garde sur la valeur $f_1 \approx 1,6\, f_0$ (x = 1,6) et à choisir une largeur de bande de l'ordre de 0,2 $f_0$. Pour une valeur de $f_0$ égale à 25 kHz, la bande de garde est par exemple centrée sur : $f_1$ = 40 kHz et comprise entre 37,5 kHz et 42,5 kHz.

Ayant choisi le critère de variation du rapport C/D pour la discrimination des échos EDV, un moyen préféré pour sa mise en oeuvre est tel que représenté par l'agencement des éléments 21 à 25 et 16 à la figure 1, dont le fonctionnement est le suivant :

Abstraction faite des puissances des échos parasites qui peuvent être reconnus et éliminés par le seul discriminateur de contraste, trois niveaux de puissance de nature différente peuvent se trouver dans la bande de garde :

- la puissance P(V) d'un écho de volume éventuel,
- la puissance P(S) de la queue du spectre de surface (du sol) du signal Fb qui dépend de l'étendue angulaire du diagramme de rayonnement et qui est proportionnelle à $\cos^n\theta$,
- la puissance P(B) du bruit thermique interne.

Le seuil $D_0$ est choisi, par étalonnage de l'ensemble de discrimination d'échos EDV, de façon telle qu'il soit sensiblement égal à la somme : P(S) + P(B) en choisissant pour P(S) l'écho du sol le moins réflecteur pour lequel le coefficient de réflexion en m$^2$ par m$^2$ est : $\sigma_0$min = 0,005 (- 23 dB). Dans ces conditions d'étalonnage, le gain des atténuateurs 22 et 16 est, en présence d'un écho de surface seul, c'est-à-dire sans écho EDV, très voisin de 1 et l'ensemble de discrimination de contraste agit comme dans l'art antérieur connu (C'≈C). Lorsqu'un écho EDV se présente seul ou superposé à l'écho de surface dans le discriminateur EDV, par contre, la valeur D en sortie de ce dernier est nettement supérieure à la valeur de seuil $D_0$ et la commande automatique de gain réalisée par l'amplificateur 25 agit de façon à provoquer en 22 une atténuation égale à $D_0/D$, le niveau du signal de sortie $\epsilon$ du mélangeur différentiel 23 devant toujours rester sensiblement nul. La même atténuation dans l'atténuateur 16 conduit à un niveau de sortie C' de ce dernier tel que :

$$C' = D_0\, C/D$$

On notera à ce sujet que les atténuateurs 16 et 22 sont choisis de façon à être aussi identiques que possible ; ces atténuateurs sont par exemple deux amplificateurs opérationnels présentant les mêmes caractéristiques.

Le niveau C' qui est de l'ordre de 8 à 15 dB plus faible que le niveau C est alors dans ce cas de plusieurs ordres de grandeur plus faible que le niveau de seuil $C_0$, ce qui provoque, dans le circuit 12, l'interdiction de verrouillage sur l'écho EDV.

En conclusion, on notera que les précipitations météorologiques constituent un volume de diffusion semi-infini qui donne lieu, à bord de radioaltimètre navigant au-dessus de la surface de transition, à un signal spectral discontinu analogue à celui réfléchi par la surface du sol. Alors que les signaux réfléchis par le sol décroissent de 6 dB par octave d'altitude, les réflexions sur les diffuseurs en volume ne décroissent que de 3 dB par octave d'altitude par rapport à la surface de transition, d'où un risque d'accrochage pour des altitudes d'autant plus faibles que l'intensité des précipitations est élevée. A cet égard, l'écho réfléchi par une pluie d'orage d'une intensité pluviométrique de 100 mm/h équivaut théoriquement à l'écho de seuil minimum ($\sigma_0$ = - 23 dB) vu à 4000 pieds. Les grêles peuvent produire des échos beaucoup plus intenses à cause de phénomènes de résonances à l'intérieur des grêlons et les niveaux réfléchis peuvent alors correspondre à des altitudes très basses. Il est toutefois possible d'obtenir une certaine discrimination entre l'écho de sol et l'écho des précipitations. En effet, un écho de surface donne un spectre de battement à support compact limité ou à tout le moins très atténué par l'ouverture du diagramme d'antenne, alors que le spectre de battement d'un écho de volume n'est pas limité vers les fréquences croissantes. Le discriminateur de contraste connu d'un radioaltimètre FM/CW classique, équilibré sur le bruit blanc par le jeu d'un certain rapport des bandes et des gains, procure une marge différentielle d'environ 10 dB, de sorte que l'altitude critique pour la pluie d'orage de 100 mm/h se trouve rejetée vers 40000 pieds. Toutefois, des grêles peu fréquentes mais non exceptionnelles peuvent provoquer des échos 100 fois plus intenses, ramenant ainsi l'altitude critique vers 100 pieds ; en fait, les inévitables tolérances sur la caractéristique de gain du récepteur absorbent en grande partie la marge indiquée plus haut.

Afin de lever efficacement le doute entre un écho de sol et un écho provoqué par des précipitations, on introduit, selon l'invention, dans le récepteur du radioaltimètre un dispositif, calé sur une bande de garde, qui analyse le spectre de battement altimétrique (Fb) au-delà de la fréquence de consigne $f_0$. Le spectre créé par un écho de surface est en effet borné par le diagramme d'antenne, alors qu'un écho de volume s'étend en profondeur, créant un spectre à décroissance lente et indépendante du diagramme d'antenne. On montre que le rapport entre le niveau de contraste C et un niveau de garde D prélevé à 0,7 octaves environ en amont de $f_0$ varie d'une façon univoque lorsqu'on passe d'un écho de surface à un écho de volume et vice-versa, et ceci pour des niveaux de précipitations très intenses et dans une plage d'altitudes étendue ; pratiquement, cette plage s'étend jusqu'à 5000 pieds pour un radioaltimètre à diagramme de rayonnement d'antenne étroit et jusqu'à 15 000 pieds pour un radioaltimètre à diagramme large. Ce dispositif de l'invention suppose une bonne linéarité de la modulation FM/CW, de façon que le spectre utile reste bien compact. Le lissage des signaux réfléchis par les précipitations est facilité par le grand nombre de réflecteurs généralement pris en compte, et surtout par la vitesse propre de l'aéronef qui provoque un brassage très rapide. Ce discriminateur d'écho est efficace en particulier vis-à-vis d'un nuage de paillettes qui pourrait éventuellement être engagé comme contre-mesure contre des missions de pénétration en basse altitude.

L'invention a été décrite ci-dessus en référence à un radar FM/CW à deux antennes ; elle pourrait aussi s'appliquer à un radar à une seule antenne d'émission-réception ; dans ce dernier cas, cependant, la discrimination entre les différents échos est plus difficile à réaliser étant donné que le signal de battement est entaché d'un signal parasite de forte puissance dû à la réflexion inévitable d'une grande partie du signal d'émission sur l'antenne, due au taux d'onde stationnaire de cette dernière.

Outre les radioaltimètres, l'invention s'applique aussi aux fusées de proximité du type FM/CW pour missiles. Dans ce dernier cas, les valeurs des paramètres à considérer sont différentes de celles liées à l'utilisation d'un radioaltimètre mais des perturbations dues aux précipitations ou aux paillettes peuvent se produire et être évitées selon l'invention. Notamment, les échos de surface à détecter sont du type ponctuel et attendus à une distance de l'ordre de 10 mètres, les longueurs d'ondes mises en jeu sont courtes, de l'ordre de 1 cm, d'où une plus grande sensibilité aux échos diffusés en volume, cette dernière caractéristique n'étant que partiellement compensée par un angle de rayonnement du faisceau d'antenne beaucoup plus fermé (environ 0,5 stéradian au lieu de 1 à 2 stéradians). Dans le cas des fusées de proximité, la reconnaissance de faux échos diffusés en volume sert à inhiber le déclenchement intempestif de la fusée.

L'application de l'invention convient particulièrement bien aux radars FM/CW dans lesquels les fréquences de battement sont régulées autour d'une valeur de consigne $f_0$ qui correspond sensiblement au maximum du spectre ; en effet cela permet de mettre en oeuvre, pour la discrimination des échos, des filtres de bande passante ayant des valeurs fixes, calées par rapport à la valeur de consigne $f_0$.

On notera que l'idée de base de l'invention s'applique aussi aux radars en impulsions avec cependant une mise en oeuvre plus complexe. Les densités spectrales $W_S(x)$ et $W_V(x)$ en Watt/Hertz établies pour un radioaltimètre FM/CW en présence d'un écho de surface ou de volume ont en effet leur contrepartie duale, pour le radar en impulsions, qui est la densité temporelle en Watt/seconde, qui s'exprime dans les mêmes termes en remplaçant la variable fréquencielle réduite $f/f_0$ par la variable temporelle $x' = Ct/2h$, t étant le temps écoulé depuis l'instant d'émission du front avant de l'impulsion de largeur $\delta$. La forme des impulsions reçues après réflexion soit par une surface diffusante, soit par un volume diffusant, correspond alors à l'échantillonnage de $W_S(x')$ ou $W_V(x')$ par une fenêtre de largeur $\Delta x' = c\delta/2h$. Les impulsions reçues épousent la forme des courbes homologues des courbes CS et CV de la figure 2, l'abscisse réduite x étant remplacée par l'abscisse $x'$ ; la coïncidence est d'autant meilleure que $\Delta x'$ reste petit devant 1. On notera à ce sujet que la présence de la fenêtre d'échantillonnage $\Delta x'$ dont la largeur diminue avec l'inverse de l'altitude conduit à une atténuation spatiale de 9 dB par octave d'altitude au lieu de 6 dB par octave pour les radioaltimètres en FM/CW. Les deux types de modulation (FM/CW ou impulsions) diffèrent dans les moyens à mettre en oeuvre pour élaborer le contraste et le niveau de garde. En FM/CW à pente asservie, le contraste et le niveau de garde peuvent être détectés au moyen de filtres fréquentiels fixes échantillonnant des spectres dont la forme reste invariante en fonction de l'altitude, alors qu'en modulation d'impulsions de largeur fixe (la seule pratiquement envisageable), la forme des impulsions reçues se dilate proportionnellement à l'altitude, ce qui nécessite un échantillonnage temporel où le décalage et la largeur de fenêtre sont variables.

## Revendications

**1.** Dispositif de discrimination d'échos diffusés en volume pour radar de mesure de distance à onde continue modulée linéairement en dents de scie de fréquence qui comporte, en série dans une boucle d'asservissement de la fréquence fb du signal de battement soustractif Fb entre ondes émise et reçue en écho, un discriminateur de poursuite recevant ledit signal de battement pour maintenir à une valeur fixe $f_0$ la fréquence fb et un circuit de validation de poursuite, ledit dispositif de discrimination étant caractérisé par le fait qu'il est conçu pour recevoir ledit signal de battement en entrée, par la combinaison d'un ensemble de discrimination de contraste avec un ensemble de discrimination d'Echos Diffusés en Volume (EDV) pour détecter de l'énergie dans une bande de fréquence dite bande de garde située à ou au-delà de l'extrémité supérieure des bandes de fréquence de l'ensemble de discrimination de contraste, ce dernier comportant en série un discriminateur de contraste et un premier atténuateur, et étant conçu pour commander ledit circuit de validation de poursuite, et ledit ensemble de discrimination EDV étant conçu pour commander le gain dudit premier atténuateur.

**2.** Dispositif de discrimination selon la revendication 1, caractérisé en ce que ledit ensemble de discrimination EDV comporte un canal de garde et un deuxième atténuateur muni d'une commande automatique de gain pour réguler sa sortie à une valeur de consigne $D_0$ et que les premier et deuxième atténuateurs sont identiques et reçoivent le même signal de commande de gain.

**3.** Dispositif de discrimination selon la revendication 2, caractérisé en ce que ledit canal de garde comporte un filtre passe bande centré sur une valeur $f_1$ comprise entre 1,5 $f_0$ et 2 $f_0$ et d'une largeur sensiblement égale à 0,2 $f_0$.

**4.** Application du dispositif de discrimination selon l'une des revendications 1 à 3 à un radioaltimètre FM/CW.

**5.** Application du dispositif de discrimination selon l'une des revendications 1 à 3 à une fusée de proximité émettant une onde FM/CW.

## Claims

**1.** Device for discriminating volumetrically scattered echoes for a distance measuring radar using continuous wave linearly modulated in frequency sawteeth which comprises, in series, in a loop for controlling the frequency fb of the subtractive beat frequency Fb between the transmitted waves and those received as echoes, a tracking discriminator receiving the said beat signal in order to maintain the frequency fb at a fixed value $f_0$ and a tracking validation circuit, the said discrimination device being characterized by the fact that it is designed to receive the said beat signal as an input, by the combination of a contrast discrimination assembly with a Volumetrically Scattered Echoes (VSE) discrimination assembly for detecting the energy in a frequency band called the end band located at or beyond the upper end of the frequency bands of the contrast discrimination assembly, the latter comprising, in series, a contrast discriminator and a first attenuator, and being designed to control the said tracking validation circuit, and the said VSE discrimination assembly being designed to control the gain of the said first attenuator.

2. Discrimination device according to Claim 1, characterized in that the said VSE discrimination assembly comprises an end channel and a second attenuator provided with an automatic gain control to adjust its output to a reference value $D_0$ and in that the first and second attenuators are identical and receive the same gain control signal.

3. Discrimination device according to Claim 2, characterized in that the said end channel comprises a band pass filter centred on a value $f_1$ included between 1.5 $f_0$ and 2 $f_0$ and having a bandwidth substantially equal to 0.2 $f_0$.

4. Application of the discrimination device according to one of Claims 1 to 3 to an FM/CW radio-altimeter.

5. Application of the discrimination device according to one of Claims 1 to 3 to a proximity fuse transmitting an FM/CW wave.

**Patentansprüche**

1. Vorrichtung zum Unterscheiden von im Raum gestreuten Echos für ein Dauerstrich-Radargerät zur Entfernungsmessung mit linearer sägezahnförmiger Frequenzmodulation, die in Serie in einer Regelschleife für die Frequenz fb des subtraktiven Überlagerungssignals Fb zwischen den gesendeten und dem als Echo empfangenen Wellen ein das Überlagerungssignal empfangenden Nachführungsdiskriminator zum Halten der Frequenz fb auf einen festen Wert $f_0$ und eine Nachführungsbestätigungsschaltungenthält, wobei die Unterscheidungsvorrichtung gekennzeichnet ist durch die Tatsache, daß sie für den Empfang des Überlagerungssignals am Eingang ausgelegt ist, durch die Kombination einer Kontrastunterscheidungsbaugruppe mit einer Unterscheidungsbaugruppe für diffuse Raumechos (EDV) zum Erfassen der Energie in einem Frequenzband, dem Schutzband, das beim oder jenseits des oberen Endes der Frequenzbänder der Kontrastunterscheidungsbaugruppe liegt, wobei letztere in Serie einen Kontrastdiskriminator und ein erstes Dämpfungsglied enthält und so ausgelegt ist, daß sie die Nachführungsbestätigungsschaltung steuert, und wobei die EDV-Unterscheidungsbaugruppe so ausgelegt ist, daß sie den Verstärkungsfaktor des ersten Dämpfungsgliedes steuert.

2. Unterscheidungsvorrichtung nach Anspruch 1, dadurch gekennzeichnet, daß die EDV-Unterscheidungsbaugruppe einen Schutzkanal und ein zweites Dämpfungsglied enthält, das mit einer Verstärkungsregelung ausgestattet ist, um sein Ausgangssignal auf einen Referenzwert $D_0$ zu regeln, und daß das erste und das zweite Dämpfungsglied identisch sind und das gleiche Verstärkungssteuersignal empfangen.

3. Unterscheidungsvorrichtung nach Anspruch 2, dadurch gekennzeichnet, daß der Schutzkanal ein auf einen Wert $f_1$ zwischen 1,5 $f_0$ und 2 $f_0$ zentriertes Bandfilter mit einer Breite von im wesentlichen gleich 0,2 $f_0$ enthält.

4. Anwendung der Unterscheidungsvorrichtung nach einem der Ansprüche 1 bis 3 bei einem FM/CW-Funkhöhenmesser.

5. Anwendung der Unterscheidungsvorrichtung nach einem der Ansprüche 1 bis 3 bei einem Annäherungszünder, der eine FM/CW-Welle aussendet.

FIG.1

FIG.2a

FIG.2b